# EUROPEAN PATENT SPECIFICATION

(11) **EP 2 939 549 B1**
(45) Date of publication and mention of the grant of the patent: **20.02.2019**
(21) Application number: 13867965.9
(22) Date of filing: 27.11.2013
(51) Int. Cl.: A23L 2/60, C12G 3/06, A23L 2/56, A23L 27/10, A23L 33/10, A23L 2/52, A23L 27/30

(54) **HERBAL EXTRACT COMPOSITION**
KRÄUTEREXTRAKTZUSAMMENSETZUNG
COMPOSITION D'EXTRAIT VÉGÉTAL

(30) Priority: 25.12.2012 JP 2012281605
(43) Date of publication of application: 04.11.2015
(73) Proprietor: Suntory Holdings Limited, Osaka-shi, Osaka 530-8203 (JP)
(72) Inventor: YOSHIHIRO, Akira, Kawasaki-shi Kanagawa 211-0067 (JP)
(74) Representative: Vossius & Partner Patentanwälte Rechtsanwälte mbB
(86) International application number: PCT/JP2013/081844
(87) International publication number: WO 2014/103596

(56) References cited:
- WO-A2-03/099042
- FR-A1- 2 825 627
- FR-A1- 2 827 297
- JP-A- 2010 235 483
- JP-A- 2011 236 238
- JP-A- 2012 116 765
- JP-A- 2012 116 847
- JP-A- 2012 131 823
- US-A1- 2005 208 194
- US-A1- 2012 258 231
- FEDERICA MENICHINI ET AL: "Phytochemical profile, antioxidant, anti-inflammatory and hypoglycemic potential of hydroalcoholic extracts fromL. cv Diamante flowers, leaves and fruits at two maturity stages", FOOD AND CHEMICAL TOXICOLOGY, PERGAMON, GB, vol. 49, no. 7, 26 March 2011 (2011-03-26) , pages 1549-1555, XP028385985, ISSN: 0278-6915, DOI: 10.1016/J.FCT.2011.03.048 [retrieved on 2011-03-30]
- GIUSEPPE GATTUSO ET AL: "Flavonoid Composition of Citrus Juices", MOLECULES, vol. 12, no. 8, 3 August 2007 (2007-08-03) , pages 1641-1673, XP055283816, DOI: 10.3390/12081641

## Description

### TECHNICAL FIELD

The present invention relates to a herbal extract composition extracted using alcohol, and a production method thereof. The present invention also relates to a use of the herbal extract composition as a sweetener.

### BACKGROUND ART

Packaged beverages that are traditionally known include green tea, black tea, blended tea and the like, but components contained in the beverages, such as catechin, or caffeine make the beverages difficult to drink, so efforts are made to improve the drinkability of the beverages (Citation 1).

Meanwhile, near-water drinks composed of natural mineral water comprising fruit juice and the like are known, and it is recognized that an addition of herbal extracts is expected to provide aromatherapeutic effects (Citation 2).

Citation 3 discloses a refreshing beverage comprising wine or must and an aromatizing or flavouring macerate obtained from elderberry blossoms.

### CITATION LIST

### PATENT DOCUMENTS

Patent Document 1: JP Publication No. 2011-10641
Patent Document 2: International Publication WO 2003/017788
Patent document 3: US Patent Application Publication US 2005/0208194 A1

### SUMMARY OF INVENTION

### TECHNICAL PROBLEM

Conventional near-water drinks containing herbal extracts had a poor balance between the sweetness of a natural sweetener or a sweetener with high sweetness and the aroma of the herbal extract, and the flavor of the beverages needed improvement. Concerning this point, Citation 2 discloses that the balance of the herbal extract and the sweetener has been improved by using Palatinose™ as the sweetener, but Palatinose™ is costly, and it is unrealistic to replace all sweeteners to be used with Palatinose™ in view of costs and other problems.

In view of the above circumstances, the object of the present invention is to provide a herbal extract composition having a refreshing sweetness on its own. Another problem to be solved by the present invention is to provide an efficient production method of a herbal extract composition having a refreshing aroma.

### SOLUTION TO PROBLEM

The present inventors repeated extensive research to solve the above problems and found that a herbal extract solution having sweetness on its own can be efficiently obtained by performing extraction on specific herbs at a specific alcohol concentration, and completed the present invention.

In other words, the present invention relates to the following without being limited thereby.
(1) A method for producing a liquid composition containing naringin at 60 mg/L or higher and hesperidin at 240 mg/L or higher, comprising
   immersing herbs in an ethanol solution of 30 to 90 v/v% to obtain an immersion liquid containing naringin at 60 mg/L or higher and hesperidin at 240 mg/L or higher, wherein the herbs are petals of a citrus tree wherein immersion is performed by using an ethanol solution containing saccharides and having a Brix value in a range of 5 to 40.
(2) The method according to (1), wherein the herbs are petals of orange flower.
(3) A liquid composition containing naringin at 60 mg/L or higher and hesperidin at 240 mg/L or higher, and obtained by the method according to (1) or (2).
(4) The use of the liquid composition according to (3) for adding sweetness.
(5) A flavor containing the liquid composition according to (3).
(6) A food and drink containing the liquid composition according to (3).
(7) A method for adding sweetness to foods and drinks comprising adding the liquid composition according to (3).

### ADVANTAGEOUS EFFECTS OF INVENTION

A herbal extract composition having a refreshing sweetness can be efficiently produced according to the present invention,. The herbal extract composition of the present invention not only has a refreshing sweetness on its own but it also has a refreshing herbal aroma, and the composition is quite useful as a raw material for beverages. The herbal extract composition of the present invention has a good sweetness and aroma, so it can be added to beverages and other foods as a flavor, such as a sweetener.

### DESCRIPTION OF EMBODIMENTS

The present invention relates to a herbal extract composition extracted by using alcohol (ethanol), and the composition of the present invention contains naringin at 60 mg/L or higher and hesperidin at 240 mg/L or higher.

Herbs in the present invention are the petals of citrus trees, and among those, the petals of orange flower are most preferable. Examples of citrus trees that may be used include orange, mandarin, *Citrus natsudaidai, Citrus unshiu, Citrus aurantium,* lemon, lime, grapefruits, *Citrus junos, Citrus sphaerocarpa, Citrus sudachi, Fortunella, Citrus poonensis, Citrus reticulata,* tangerine, clementine, *Citrus depressa,* sweetie, bergamot. In addition, a single type or a combination of two or more types of herbs may be used for producing herbal extracts in the present invention. Note that "orange flower" used in the present invention includes both the bitter orange flower and sweet orange (i.e. orange) flower.

The production method of the above herbal extracts is not particularly limited, but extraction is possible by immersing herbs in a beverage alcohol solution (ethanol solution) and leaving it still. Any beverage alcohol can be used as long it is drinkable, and the preferable alcohol is ethanol. Raw material ethanols may be preferably used as ethanol, and distilled alcohol such vodka, *shochu,* spirits may be used. The alcohol concentration of an alcohol solution used in the immersion of herbs is 30 to 90 v/v%, more preferably 35-85 v/v%, and even more preferably 45-65 v/v%. From the viewpoint of the balance of the aroma of the extract solution, an alcohol concentration of about 50% allows a herbal extract with a refreshing sweetness and aroma to be efficiently extracted, so this alcohol concentration is the most preferable.

The immersion (extraction) period is not particularly limited, but a period of 3 days or longer is preferable, a period of 5 days or longer is more preferable, and a period of about 1 week (7 days) or longer is even more preferable. The immersion time can be shortened by raising the immersion temperature. The immersion temperature is not particularly limited either, but a temperature of 5 to 70°C is preferable, a temperature of 10 to 60°C is more preferable, and a temperature of 15 to 40°C is even more preferable in view of the extraction efficiency. In addition, the immersion period may be controlled by the amount of naringin or hesperidin contained in the extract solution, as explained hereinafter.

Further, when extracting components from herbs using alcohol, the brix value of the immersion liquid is raised in advance by adding saccharides to the immersion liquid to improve the extraction efficiency, and to reduce the immersion period. Saccharides to be added to the alcohol solution, which is an immersion liquid, may be appropriately selected from disaccharides such as sucrose, and monosaccharides such as fructose or glucose, or these saccharides can be combined for use. The saccharides are added in an amount that imparts a brix value of 5 to 40 to the alcohol solution. Above all, sucrose should preferably added in an amount that imparts a brix value of 10 or higher to the alcohol solution, more preferably a brix value of 15 or higher, and most preferably in an amount that imparts a brix value of 20 to 30 to the alcohol solution. The brix value can be measured by a known method in the present invention, and it can be measured, for example, by using a general brix scale (saccharimeter) that uses an index of refraction.

In the present invention, it is possible to judge whether active components were sufficiently extracted from herbs by quantifying naringin or hesperidin contained in the obtained immersion liquid. Specifically speaking, for example, extraction may be judged as complete when the naringin content in the immersion liquid is 60 mg/L or higher and the hesperidin content is 240 mg/L or higher, and more preferably, extraction may be judged as complete when the naringin content is 70 mg/L or higher and the hesperidin content is 400 mg/L or higher. The upper limit of the concentration of naringin or hesperidin is not particularly limited, but in a preferable embodiment, for example, naringin concentration may be 3000 mg/L or lower, more preferably 2000 mg/L or lower. Also, the hesperidin concentration may be, for example, preferably 2000 mg/L or lower, more preferably 1500 mg/L or lower, and even more preferably 1000 mg/L or lower.

The amount ratio of naringin and hesperidin is also not particularly limited, but in a preferable embodiment, the hesperidin content/ naringin content is preferably 2 or higher, more preferably 3 or higher, and even more preferably 4 or higher.

Hesperidin is a flavonoid that is contained richly in citrus; it is a type of polyphenol; and it is a substance allegedly having an antioxidant effect. Naringin is a flavonoid that is contained richly in citrus, such as grapefruits; and it allegedly induces a refreshing sensation or bitterness.

Terpenes or esters that provide refreshing aroma leach out in a preferable embodiment of the herb immersion liquid obtained by the present invention, and it is possible to obtain a more preferable herbal extract solution or to judge a preferable immersion completion time by measuring those terpenes and esters. For example, the composition of the present invention should preferably have a terpene concentration of 5 mg/L or higher, and more preferably 15 mg/L or higher. The ester concentration in the composition of the present invention is preferably 5 mg/L or higher, and more preferably 10 mg/L or higher.

The quantification of the above components can be performed by a known method. For example, components contained in the composition can be separated by liquid chromatography or gas chromatography, and quantified using a known detector.

The immersion liquid obtained by the above process may have the solid fraction removed by a known solid-liquid separation method as necessary. The solid-liquid separation method may be performed for example by filtration or centrifugation, and the unnecessary solids can be removed by methods such as microfilter penetration.

In addition, the herbal extract solution may be condensed by a known method in the present invention. For example, when the extract components, such as naringin or hesperidin, is lower than the above reference level, the extract solution may be condensed by methods including evaporation, decompression/distillation, or freeze-concentration. The above reference level can be used as the reference to determine the completion of condensation.

The herbal extract composition obtained by the present invention has not only a refreshing sweetness, but also a refreshing aroma extracted from herbs, so it may be used as a beverage by itself, and it is also quite preferable as additives for foods and drinks. For example, the composition of the present invention may be added to foods and drinks as a flavor, such as a sweetener or seasoning. Hence, the composition of the present invention can add a refreshing sweetness or aroma to foods and drinks.

### EXAMPLES

The present invention is explained below by Examples without being limited thereby. In addition, "%," "part" and the like are based on weight and a numerical range includes the end points in the present specification unless stated otherwise.

### EXAMPLE 1

Orange flowers (obtained from Cailleau Corporation, France) (5 g) were put in a glass cylinder, and 100 mL of ethanol solution was added before the cylinder was sealed, then the cylinder was kept still for 7 days at room temperature (23°C). Eight types of ethanol solutions with different ethanol concentrations (v/v%) were used as immersion solvents to perform extraction. Ethanol solutions of different concentrations were obtained by diluting a 94% raw material ethanol to each concentration with distilled water. The obtained orange flower immersion liquid was filtered with a 0.45 µm microfilter, and an alcohol-based extract solution of orange flower petals was obtained as the filtrate.

Also, the amount of orange flower was altered to 20 g/L (Experiment No. 5) or 100 g/L (Experiment No. 6), and a 40% alcohol solution was used as the extraction solvent to obtain the extract solution by the above method.

This extract solution was measured concerning the contents of terpenes and esters using gas chromatography (Agilent Corporation, 6890) under the following conditions. Specifically, the total concentration of β-pinene, myrcene, limonene, Z-limonene oxide, E-limonene oxide, linalool, camphor, 1-terpinen-4-ol, citral [cis/trans] was quantified for terpenes, and the total concentration of acetal, furfural, phenylethanol, phenyl acetate, ethyl myristate, ethyl palmitate was quantified for esters.

### <Measurement Condition for Gas Chromatography>

- Column: Ultra2 [5% Phenyl Methyl A Siloxane, 50 m×0.32 mm I.D.×0.52 um film thickness] (Model No.; Agilent 19091B-115)
- Oven: starting temperature of 40°C, raised up to 325 °C
- Detector: FID Detector

In addition, the concentrations of naringin, hesperidin were measured by liquid chromatography (UHPLC produced by Agilent Co., Infinity 1290, Kinetex C18 Column, water-methanol gradient)

Three well-trained expert panelists performed a sensory evaluation concerning the obtained extract solution in a scale of four based on the following standard. ⊚: Feel a strong refreshing sweetness; ○: Feel a refreshing sweetness; Δ: Feel slight sweetness; ×: Do not feel a pleasant sweetness.

In addition, a sensory evaluation of Sample 4 (the sample of Experiment No. 4) was performed, and the sweetness was compared with sucrose solutions of various concentrations.

The result of the sensory evaluation is shown in the table below with the measurement results for the different components. As seen from the table, the extract solution of orange flower petals obtained using a 50% alcohol solution exhibited efficient extraction of naringin and hesperidin, and it had a refreshing and pleasant sweetness. In addition, when the sweetness of Sample 4 was evaluated by comparison with the sucrose solution, the sweetness was equal to that of a 1.6% sucrose solution, which showed that this extraction solution is effective as a sweetener.

Also, the result concerning the amount of orange flowers was that an amount of 20 g/L made the aroma of an immersion liquid slightly weak (Experiment Nos. 4 to 6).

**[Table 1]**

| Experiment No | 1 | 2 | 3 | 4 | 5 | 6 | 7 | 8 | 9 | 10 |
|---|---|---|---|---|---|---|---|---|---|---|
| Extract alcohol conc.(%) | 10 | 20 | 30 | 40 | 40 | 40 | 50 | 60 | 70 | 90 |
| Petal amount (g/l) | 50 | 50 | 50 | 50 | 20 | 100 | 50 | 50 | 50 | 50 |
| Terpene(mg/l) | 3.3 | 4.4 | 7.6 | 18 | 10 | 33 | 23 | 55 | 47 | 40 |
| Ester (mg/l) | 20 | 17 | 5.5 | 16 | 9.0 | 18 | 27 | 18 | 18 | 9.7 |
| Naringin (mg/l) | 27 | 46 | 71 | 75 | 23 | 200 | 110 | 76 | 110 | 60 |
| Hesperidin (mg/l) | 24 | 150 | 370 | 410 | 240 | 910 | 490 | 440 | 500 | 230 |
| Sensory evaluation | × | × | ○ | ⊚ | Δ | ⊚ | ⊚ | ○ | ○ | × |

### Example 2

The orange flower was added in an amount of 40 g/L against a 50% alcohol solution, then sucrose was added to that solution, after which the solution was subsequently left still in a sealed container for 1 to 3 weeks at room temperature to obtain an immersion liquid. An experiment was conducted to confirm the effect of saccharide concentration on the extract solution by adding sucrose at a level that imparts a brix value of 0 to 40 to a 50% alcohol solution (an extract solution having a brix value of 0 is sucrose free).

The obtained immersion liquid was subjected to a measurement of components and a sensory evaluation similar to Experiment Example 1. Sugar was removed from the immersion liquid using Extrelut™ NT1 produced by Merck Co. before evaluation.

The result is shown in the following table, and it can be read that the extraction was almost complete in one week. Also, the flavor of the obtained extract solution improved substantially when sucrose was added at a level that imparts a brix value of 20.

**[Table 2]**

| Experiment No | 1 | 2 | 3 | 4 | 5 | 6 | 7 | 8 |
|---|---|---|---|---|---|---|---|---|
| Brix | 0 | 5 | 10 | 20 | 30 | 30 | 30 | 40 |
| Immersion period (wk) | 1 | 1 | 1 | 1 | 1 | 2 | 3 | 1 |
| Terpene(mg/l) | 19 | 17 | 21 | 22 | 24 | 22 | 24 | 29 |
| Ester (mg/l) | 14 | 15 | 18 | 19 | 15 | 57 | 58 | 13 |
| Naringin (mg/l) | 84 | 95 | 80 | 91 | 88 | 180 | 180 | 99 |
| Hesperidin (mg/l) | 260 | 280 | 260 | 280 | 260 | 680 | 790 | 250 |
| Sensory evaluation | ○ | ○ | ○ | ⊚ | ⊚ | ⊚ | ⊚ | ○ |

### Experiment Example 3

Various herbs were used for obtaining herbal extract solutions to confirm what effect each type of herb has. Petals of oranges (orange flower), buds of oranges (Cailleau Corporation, France), leaves of oranges (Cailleau Corporation, France), petals of jasmine (Cailleau Corporation, France), petals of elderflower (Cailleau Corporation, France), petals of acacia (Cailleau Corporation, France) were used as herbs, and they were added in an amount of 50 g/L against a 50% alcohol solution, and left still in a sealed container for four weeks at room temperature to obtain an immersion liquid.

The obtained immersion liquid was subjected to a measurement of components and a sensory evaluation similar to Experiment Example 1.

The result is shown in the following table, and it can be read that orange flowers showed the best sensory result, and the buds and leaves of oranges followed. Also concerning plants other than orange, a good result was observed for the extract solution of elderflower. The "n.d." in the table indicates that the substance was not detected.

**[Table 3]**

| Experiment No | 1 | 2 | 3 | 4 | 5 | 6 |
|---|---|---|---|---|---|---|
| Orange/petals (g/l) | 50 | - | - | - | - | - |
| Orange/buds (g/l) | - | 50 | - | - | - | - |
| Orange/leaves (g/l) | - | - | 50 | - | - | - |
| Jasmine/petals (g/l) | - | - | - | 50 | - | - |
| Elderflower/petals(g/l) | - | - | - | - | 50 | - |
| Acacia/petals (g/l) | - | - | - | - | - | 50 |
| Terpene(mg/l) | 27 | 17 | 3.6 | 0.5 | 0.75 | 2.5 |
| Ester (mg/l) | 63 | 51 | 48 | 5.3 | 62 | 71 |
| Naringin (mg/l) | 88 | 1600 | 120 | 12 | 270 | 25 |
| Hesperidin (mg/l) | 430 | 520 | 490 | n.d. | 70 | n.d. |
| Sensory evaluation | ⊚ | ○ | ○ | × | Δ | × |

### Experiment Example 4

The effect on the flavor of the beverage when the herbal extract solution of the present invention is used as a sweetener or a seasoning was evaluated. Specifically, beverages were prepared by adding 5 mL of the extraction liquid of Sample 4 obtained in Experiment Example 1 to 1000 mL of each of the beverages below.
- Near-water drink (Tennensui, Suntory Beverage & Food)
- Tea drink (Jasmine tea, Suntory Beverage & Food)
- Low calorie drink using sweeteners with high sweetness (Vitamin water, Suntory Beverage & Food)
- *Chu-hi* (Calori Mediterranean Lemon, Suntory Liquors Limited)
- Liqueur (Mistia, Suntory Liquors Limited)
- Beers (Kinmugi, Suntory Liquors Limited)
- Wine (Delica Maison White, Suntory Wine International Limited)
- Spirits (Dry Gin, Suntory Liquors Limited)

Three expert panelists performed a sensory evaluation concerning the flavor of the prepared beverages in a scale of four based on the following standard. ⊚: Feel a strong refreshing sweetness; ○: Feel a refreshing sweetness; Δ: Feel a slight sweetness; ×:Do not feel a pleasant sweetness.

The result is shown in the table below. By adding the liquid composition of the present invention, it was possible to impart flavor, particularly a refreshing sweetness, to all beverages.

**[Table 4]**

| Beverages | Evaluation | Comments |
|---|---|---|
| Near-water | ⊚ | Feel strong refreshing sweetness, aroma |
| Tea beverage | ○ | Feel refreshing sweetness |
| Low calorie beverage | ○ | Feel refreshing sweetness |
| Chu-hi | ○ | Acidity is slightly masked, feel sweetness |
| Liqueur | ⊚ | Feel strong refreshing sweetness, aroma in after taste |
| Beer | ○ | Bitterness is slightly masked, feel refreshing sweetness, aroma |
| Wine | ⊚ | Feel strong refreshing sweetness, aroma in after taste |
| Spirits | ○ | Feel refreshing sweetness |

## Claims

1. A method for producing a liquid composition containing naringin at 60 mg/L or higher and hesperidin at 240 mg/L or higher, comprising
immersing herbs in an ethanol solution of 30 to 90 v/v% to obtain an immersion liquid containing naringin at 60 mg/L or higher and hesperidin at 240 mg/L or higher, wherein the herbs are petals of a citrus tree and wherein immersion is performed by using an ethanol solution containing saccharides and having a brix value in a range of 5 to 40.

2. The method according to Claim 1, wherein the herbs are petals of orange flower.

3. A liquid composition containing naringin at 60 mg/L or higher and hesperidin at 240 mg/L or higher obtained by the method as defined in claims 1 and 2.

4. Use of the liquid composition according to Claim 3 for adding sweetness.

5. A flavor containing the liquid composition according to Claim 3.

6. A food and drink containing the liquid composition according to Claim 3.

7. A method for adding sweetness to foods and drinks comprising adding the liquid composition according to Claim 3.

## Patentansprüche

1. Ein Verfahren zur Herstellung einer flüssigen Zusammensetzung enthaltend Naringin in einer Menge von 60 mg/L oder mehr und Hesperidin in einer Menge von 240 mg/L oder mehr, umfassend
Eintauchen von Kräutern in eine Ethanollösung von 30 bis 90 v/v%, um eine Immersionsflüssigkeit enthaltend Naringin in einer Menge von 60 mg/L oder mehr und Hesperidin in einer Menge von 240 mg/L oder mehr zu erhalten, wobei die Kräuter Blütenblätter eines Zitrusbaums sind und wobei das Eintauchen unter Verwendung einer Ethanollösung, welche Saccharide enthält und einen Brixwert in einem Bereich von 5 bis 40 aufweist, durchgeführt wird.

2. Das Verfahren gemäß Anspruch 1, wobei die Kräuter Blütenblätter von Orangenblüten sind.

3. Eine flüssige Zusammensetzung enthaltend Naringin in einer Menge von 60 mg/L oder mehr und Hesperidin in einer Menge von 240 mg/L oder mehr, erhalten durch das Verfahren wie in Anspruch 1 und 2 definiert.

4. Verwendung der flüssigen Zusammensetzung gemäß Anspruch 3 zum Hinzufügen von Süße.

5. Ein Aroma enthaltend die flüssige Zusammensetzung gemäß Anspruch 3.

6. Ein Nahrungsmittel und Getränk enthaltend die flüssige Zusammensetzung gemäß Anspruch 3.

7. Ein Verfahren zur Zugabe von Süße zu Nahrungsmitteln und Getränken, umfassend die Zugabe der flüssigen Zusammensetzung gemäß Anspruch 3.

## Revendications

1. Procédé pour produire une composition liquide contenant de la naringine à raison de 60 mg/l ou plus et de l'hespéridine à raison de 240 mg/l ou plus, comprenant
l'immersion d'herbes dans une solution éthanolique à 30 à 90 % en volume/volume pour que soit obtenu un liquide d'immersion contenant de la naringine à raison de 60 mg/l ou plus et de l'hespéridine à raison de 240 mg/l ou plus,
dans lequel les herbes sont des pétales de citrus et dans lequel l'immersion est effectuée par utilisation d'une solution éthanolique contenant des saccharides et ayant une valeur Brix comprise dans la plage allant de 5 à 40.

2. Procédé selon la revendication 1, dans lequel les herbes sont des pétales de fleur d'oranger.

3. Composition liquide contenant de la naringine à raison de 60 mg/l ou plus et de l'hespéridine à raison de 240 mg/l ou plus, obtenue par le procédé tel que défini dans les revendications 1 et 2.

4. Utilisation de la composition liquide selon la revendication 3 pour ajouter de la sucrosité.

5. Agent de saveur contenant la composition liquide selon la revendication 3.

6. Aliment et boisson contenant la composition liquide selon la revendication 3.

7. Procédé pour ajouter de la sucrosité à des aliments et des boissons, comprenant l'addition de la composition liquide selon la revendication 3.
